# EUROPÄISCHE PATENTANMELDUNG

(11) **EP 2 466 226 A2**
(43) Veröffentlichungstag der Anmeldung: **20.06.2012**
(21) Anmeldenummer: 11009810.0
(22) Anmeldetag: 14.12.2011
(51) Int. Cl.: F24J 2/46

(54) **Solarkollektor**

(30) Priorität: 17.12.2010 DE 102010055021
(71) Anmelder: Vaillant GmbH, 42859 Remscheid (DE)
(72) Erfinder: Schönfeld, Ulrike, 99425 Wimar (DE); Heinen, Lars, 53123 Bonn (DE); Salg, Frank, 42897 Remscheid (DE); Sick, Jan-Hinrich, Dr., 42897 Remscheid (DE); Spahn, Hans-Josef, 40699 Erkrath (DE)
(74) Vertreter: Hocker, Thomas

(57) **Zusammenfassung**

Die Erfindung betrifft einen Solarkollektor, dessen transparente Abdeckung 1 veränderbare Transmissions- und/oder Reflektionseigenschaften aufweist. Durch Eintrübung, Verdunkelung oder durch Erhöhung der Reflektion wird bei hoher Sonneneinstrahlung bei gleichzeitiger geringer Entnahme von Wärme die Stagnation vermieden.

## Beschreibung

Die Erfindung betrifft einen Solarkollektor zur thermischen Nutzung von Sonnenenergie.

Gattungsgemäße Solarkollektoren werden eingesetzt, um thermische Sonnenenergie für die Beheizung von Gebäuden oder von Brauchwasser zu nutzen und sind beispielsweise aus der Patentanmeldung WO 2004/070289 A1 bekannt. Um die Sonnenenergie zu nutzen, sind Solarkollektoren in Richtung der Sonne ausgerichtet und weisen auf der der Sonne zugewandten Seite eine transparente Oberfläche auf. Rückseitig sind Solarkollektoren in der Regel gut wärmeisoliert. Im Inneren werden Solarkollektoren von einem Wärmeträgermedium, meist einer wasserbasierten Sole, durchströmt. Dieses Wärmeträgermedium transportiert die vom Solarkollektor gewonnene Energie in Form des erwärmten Wärmeträgermediums vom Solarkollektor zur Wärmesenke, beispielsweise einem zu beheizenden Gebäude, einem Wasserspeicher etc.

Das Problem bei Solarkollektoren ist, dass im Sommer die meiste Sonnenleistung auf den Solarkollektor einwirkt, gleichzeitig aber der geringste Wärmebedarf besteht und damit die Wärme nicht in einem ausreichenden Maß abgeführt wird. Dabei können sehr hohe Temperaturen im Solarkollektor auftreten, die die Materialien des Solarkollektors und das Wärmeträgermedium durch physikalische oder chemische Alterungsprozesse oder durch Verdampfung schädigen können. Dieser Zustand wird als Stagnation bezeichnet.

Aus diesem Grund werden Solarkollektor-Anlagen meist sehr klein und hauptsächlich für den Sommer-Betrieb ausgelegt, eben um die Stagnation zu vermeiden. Ohne Stagnation könnten Solarkollektor-Anlage hinsichtlich des Heizungsbedarfs im Winter ausgelegt werden.

Um die Stagnation zu verhindern, schlägt die WO 2004/070289 A1 vor, einen Solarkollektor mit Lüftungsklappen auszustatten, die bei hohen Temperaturen öffnen, so dass Luft das Innere des Solarkollektors aufgrund der Konvektion durchströmt und diesen kühlt.

Da jedoch Solarkollektoren in der Regel auf einem Dach montiert sind und dort einerseits ungünstigen Witterungseinflüssen und Verschmutzungen z.B. durch Laub ausgesetzt sind, andererseits für eine Wartung schwer zugänglich sind, besteht das Risiko, das die mechanischen Lüftungsklappen ausfallen und eine Schädigung des Solarkollektors nach sich ziehen. Zum anderen können diese Lüftungsklappen nur für so genannte Flachkollektoren eingesetzt werden. Für besonders effiziente Röhrenkollektoren, deren Innenraum evakuiert ist, sind solche Lüftungsklappen nicht einsetzbar.

Es ist daher Aufgabe der Erfindung, besonders wartungsarme und zuverlässige Schutzmittel bereitzustellen, die die Stagnation an Solarkollektoren in Form von Flachkollektoren oder Röhrenkollektoren verhindern.

Diese Aufgabe wird durch einen Solarkollektor gemäß Anspruch 1 gelöst. Erfindungsgemäß weist der Solarkollektor eine transparente Abdeckung auf, deren Transmissions- und/oder Reflexionseigenschaften veränderbar sind. Dies erfolgt selbsttätig in Abhängigkeit von einer Temperatur des Solarkollektors und/oder von einer Lichtstärke des einfallenden Sonnenlichts und/oder von einer externen elektrischen Spannung, die durch ein externes Steuergerät bereitgestellt wird.

In einer Ausführungsvariante ist die transparente Abdeckung aus einer oder mehreren transparenten Scheiben sowie aus einem Schattierungsmittel aufgebaut, dass die benötigte veränderbare Transmissions- und/oder Reflektionseigenschaften aufweist. Dieses Schattierungsmittel ist als Beschichtung auf eine der transparenten Scheiben aufgebracht.

In einer weiteren Ausführungsvariante ist das Schattierungsmittel zwischen zwei transparenten Scheiben vorgesehen. Dies hat den Vorteil, dass das Schattierungsmittel geschützt ist und somit auch empfindliche Materialien verwendet werden können.

In einer dritten Ausführungsvariante ist das Schattierungsmittel als Zuschlagstoff in zumindest eine der transparenten Scheiben eingebracht.

In einer Ausführungsform weist das Schattierungsmittel optische Eigenschaften auf, die von der Temperatur abhängig sind. Es erfolgt oberhalb einer Grenztemperatur eine Ausscheidung, eine Entmischung, ein Phasenwechsel oder eine Kristallisation. Dies hat eine Trübung des Schattierungsmittels zur Folge, so dass weniger Sonneneinstrahlung auf den Solarkollektor einwirkt. Bevorzugt handelt es sich um eine Flüssigkeit, ein Gel oder ein Feststoff. Im Falle einer Flüssigkeit oder eines Gels ist das Schattierungsmittels zwischen zwei transparenten Scheiben vorgesehen.

In einer Ausführungsvariante erfolgt oberhalb einer Grenztemperatur ein Farbwechsel oder eine Trübung durch einen teilweisen Farbwechsel oder eine weiße Eintrübung. Dies kann mit einem reversiblen thermotropen oder reversiblen thermochromen Material erfolgen. Bevorzugt enthält das Schattierungmittel Vanadium-Oxid.

In einer anderen Ausführungsvariante enthält das Schattierungsmittel ein photochromes Material, bei dem oberhalb einer Grenzlichtstärke ein Farbwechsel erfolgt. Damit wird der Solarkollektor vor zu intensiver Sonnenbestrahlung geschützt.

In einer weiteren Ausführungsvariante enthält das Schattierungsmittel ein elektrochromes Wolframoxid Vanadium-Oxid. Zugleich enthält die transparente Abdeckung ein Solarmodul mit niedriger Farbstoffkonzentration, die das Schattierungsmittel bei überschreiten einer bestimmten Lichtintensität unter Spannung setzt und damit eine Schattierung bewirkt.

In einer alternativen Ausführungsvariante enthält das Schattierungsmittel ein reversibel photoelektrochromes Material, das die zuvor beschriebenen Effekte kombiniert.

Alternativ dazu kann auch ein reversibel elektrochromes Material im Schattierungsmittel enthalten sein, dass sich bei externer Schaltung mit Strom versorgt. Die externe Schaltung mit Strom kann durch ein extern angeordnetes Solarmodul sowie durch ein optionales Steuergerät erfolgen. Insbesondere das Solar Modul kann im Solarkollektor integriert sein.

Weiterhin kann das Schattierungsmittel ein reversibel gaschromes Material enthalten, welches ab einer bestimmten Temperatur mit Gas beaufschlagt wird. Es erfolgt eine Abdunklung (Blaufärbung) durch Kontakt mit einem Gas.

Weitere besonders bevorzugte Materialien für das Schattierungsmittel werden nachfolgend beschrieben.

Besonders bevorzugt ist der Einsatz von reversiblen HYSWIM (Hydrogen Switchable Mirrors)- Systemen in Form eines schaltfähigen Spiegels. Ein typischer schaltfähiger Spiegel (SfS) besteht aus drei Komponenten: (i) einem transparenten Substrat, (ii) einer aktiven schaltfähigen Metall-Wasserstoff Schicht, (iii) einer Deckschicht (z.B. Palladium), die die aktive Schicht gegen Oxidation schützt und Wasserstoffdissoziation ermöglicht. Die aktive Schicht (Magnesium und 3d-Übergangsmischmetall) wird reversibel durch Wasserstoffabsorption oder chemische Elektrolyse transparent.

Ebenfalls besonders bevorzugt ist der Einsatz von reversiblen PDLC (Polymer Dispersed Liquid Crystal)- Systemen. Bei Polymer-Dispersed-Liquid-Crystal handelt es sich um ein neu entwickeltes Material, das aus winzigen Flüssigkristall-Tröpfchen besteht, die sich verstreut innerhalb eines festen polymeren Werkstoffs befinden. Durch das Anlegen einer elektrischen Spannung ändern die Flüssigkristall-Moleküle ihre Ausrichtung. Dadurch ist es möglich, die Durchsicht des Glases zu verändern.

Auch besonders bevorzugt ist der Einsatz von reversiblen SPD (Suspended Particle Devices)- Systemen. Schaltung in Form eines Aufklarens durch Orientierung optisch anisotroper absorbierender Teilchen bei Anlegen einer Spannung. Ähnlich wie bei PDLC-Systemen handelt es sich bei den sogenannten Suspended-Particle-Devices um Folien, die sich durch Anlegen einer Spannung innerhalb von einer Sekunde abdunkeln lassen, die Durchsicht bleibt weitgehend erhalten. Der wesentliche Unterschied besteht darin, dass hier die ausgerichteten Teilchen in einer Richtung stark absorbieren und dadurch die Scheibe im ausgeschalteten Zustand stark abdunkelt.

Die Erfindung wird nun anhand der Figuren detailliert erläutert. Hierbei zeigen

Es stellen dar:
- Figur 1:: Einen erfindungsgemäßen Solarkollektor
- Figur 2:: Eine Varianate des erfindungsgemäßen Solarkollektos aus Figur 1

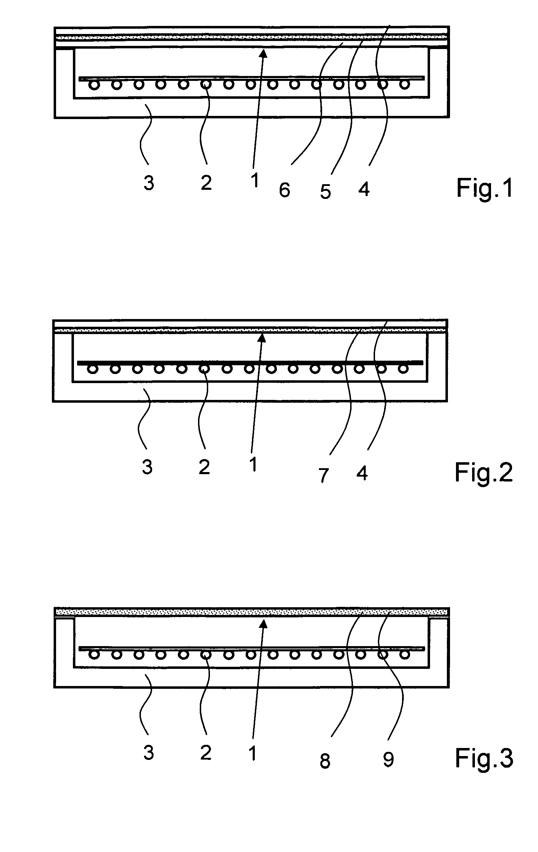

Figur 1 zeigt einen erfindungsgemäßen Solarkollektor. Der Solarkollektor besteht aus einer der Sonne zugewandten transparenten Abdeckung 1 und einen darunter angeordneten Absorber, der bei Sondereinstrahlung erwärmt. Die Wärme kann durch eine im Absorber vorgesehene Verrohung mittels eines Wärmeträgermediums an eine hier nicht dargestellte Wärmesenke abgeführt werden. Unterseitig und zur Seite der Solarkollektor durch eine isolierende Wanne abgeschlossen. Ist die Wärmesenke im sommerlichen Betrieb nicht in der Lage, die anfallende Wärme abzuführen, kommt es zu einer starken Erwärmung des Solarkollektors, wodurch Bauteile des Solarkollektor und/oder das Wärmeträgermedium Schaden nimmt. Dies wird als Stagnation bezeichnet.

Die transparente Abdeckung des Solarkollektor in Figur 1 enthält zwei transparente Scheiben 4 und 6 sowie ein zwischen den Scheiben 4, 6 angeordnetes Schattierungsmittel.

Aufgabe des Schattierung mittels ist es, sich oberhalb einer bestimmten Temperatur oder einer bestimmten Lichtintensität zu verdunkeln oder einzutrüben. Dies ist erfindungsgemäß mit verschiedenen Materialien möglich. Insbesondere bei einer Anordnung in einem am Rand abgedichteten Mehrscheiben-Isolierglas ist es möglich, Gele oder Flüssigkeiten einzubringen.

In einem Beispiel befinden sich in einer im Mehrscheiben-Isolierglas integrierten Gelschicht zwei verschiedene Substanzen, die sich ab einer bestimmten Temperatur mischen bzw. entmischen. Im vermischten Zustand bei niedriger Temperatur ist das Schattierungsmittel 5 durchsichtig. Bei Überschreiten der Grenztemperatur wird das Schattierungsmittel trübe und somit wird der Energieeintrag in den Solarkollektor verringert. Durch die Trübung ist in diesem Zustand eine Durchsicht nicht möglich. Bei sinkender Temperatur wird das Schattierungsmittel wieder durchsichtig.

In einem anderen Beispiel schaltet bei Temperaturunterschieden eine im Mehrscheiben-Isolierglas integrierte Vanadium-Oxid-Schicht den unsichtbaren Infrarot-Bereich. Bei tiefen Temperaturen werden die wärmenden Infrarot-Strahlen der Sonne durchgelassen, bei hohen Temperaturen reflektiert.

In einem weiteren Beispiel wird für das Schattierungsmittel ein reversibel photochromes Material verwendet. Die Schattierung erfolgt in Form einer Abdunklung durch Bestrahlung. Photochrome Systeme reagieren auf die Beleuchtungsverhältnisse. Bei Bestrahlung färbt sich die transparente Abdeckung 1 von klarer Durchsicht auf grau-braun. Die Basis bilden ein Schichtsystem aus elektrochromem Wolframoxid und eine Farbstoffsolarzelle mit niedriger Farbstoffkonzentration.

Ein erfindungsgemäß ebenfalls ein geschlossenes Beispiel verwendet ein reversibel elektrochromes Material. Die Schattierung des Schattierungsmittels 5 erfolgt durch eine Abdunklung (Färbung) durch einen elektrischen Strom. Die Schaltung von klarer Durchsicht auf dunkelblaue Farbe erfolgt über schwache elektrische Spannungsimpulse. Sie regulieren die Licht- und Wärmedurchlässigkeit der beschichteten Isoliergläser; die Durchsicht bleibt erhalten. Der elektrische Strom kann durch ein extern vorgesehenes, hier nicht dargestelltes photovoltaisches Solarmodul bereitgestellt werden. Ebenfalls kann ein nicht dargestelltes Steuerungsgerät vorgesehen sein, welches das Schattierungsmittel bei Überschreiten einer Grenztemperatur oder einer Grenzlichtintensität mit Strom bzw. Spannung beaufschlagt.

Die Figuren 2 und 3 Stellen Ausführungsvarianten des Solarkollektor aus Figur 1 dar. In Figur 2 wird die transparente Abdeckung 1 aus einer transparenten Scheibe 4 gebildet, die unterseitig mit einem Schattierungsmittel 7 beschichtet ist. Das Schattierungsmittel 7 kann alle zuvor beschriebenen festen Materialien enthalten.

Figur 3 stellt eine transparente Abdeckung 1 dar, bei der das Schattierungsmittel 9 als Zuschlagstoff in der transparenten Scheibe 8 enthalten ist.

### Bezugszeichenliste

- 1: Transparente Abdeckung
- 2: Absorber
- 3: Wanne
- 4: Transparente Scheibe
- 5: Schattierungsmittel
- 6: Transparente Scheibe
- 7: Schattierungsmittel
- 8: Transparente Scheibe
- 9: Schattierungsmittel

## Patentansprüche

1. Solarkollektor mit einer transparenten Abdeckung (1), **dadurch gekennzeichnet, dass** die transparente Abdeckung (1) abhängig von einer Temperatur des Solarkollektors und/oder von einer Lichtstärke und/oder von einer externen elektrischen Spannung veränderbare Transmissions- und/oder Reflexionseigenschaften aufweist.

2. Solarkollektor nach Anspruch 1, **dadurch gekennzeichnet, dass** die transparente Abdeckung (1) aus einer oder mehreren transparenten Scheiben (4, 6) sowie aus einem Schattierungsmittel (7), mit veränderbaren Transmissions- und/oder Reflexionseigenschaften besteht und dass das Schattierungsmittel (7) als Beschichtung auf einer der transparenten Scheiben (4, 6) aufgebracht ist.

3. Solarkollektor nach Anspruch 1, **dadurch gekennzeichnet, dass** die transparente Abdeckung (1) aus einer oder mehreren transparenten Scheiben (4, 6) sowie aus einem Schattierungsmittel (5) mit veränderbaren Transmissions- und/oder Reflexionseigenschaften besteht und dass das Schattierungsmittel (5) zwischen zwei transparenten Scheiben (4, 6) vorgesehen ist.

4. Solarkollektor nach Anspruch 1, **dadurch gekennzeichnet, dass** die transparente Abdeckung (1) aus einer oder mehreren transparenten Scheiben (4, 6, 8) besteht, und dass ein Schattierungsmittel (9) mit veränderbaren Transmissions- und/oder Reflexionseigenschaften als Zuschlagsstoff in zumindest eine der transparenten Scheiben (8) eingebracht ist.

5. Solarkollektor nach einem der Ansprüche 1 bis 4, **dadurch gekennzeichnet, dass** die optischen Eigenschaften des Schattierungsmittels (5, 7, 9) in der Form temperaturabhängig sind, dass oberhalb einer Grenztemperatur eine Eintrübung durch zumindest teilweise Ausscheidungen, Entmischung, Phasenwechsel oder Kristallisation erfolgt.

6. Solarkollektor nach Anspruch 5, **dadurch gekennzeichnet, dass** das Schattierungsmittel (5, 7, 9) eine Flüssigkeit, ein Gel oder ein Feststoff ist.

7. Solarkollektor nach einem der Ansprüche 1 bis 4, **dadurch gekennzeichnet, dass** die optischen Eigenschaften des Schattierungsmittels (5, 7, 9) in der Form temperaturabhängig sind, dass oberhalb einer Grenztemperatur ein Farbwechsel oder eine Trübung durch teilweisen Farbwechsel erfolgt.

8. Solarkollektor nach Anspruch 7, **dadurch gekennzeichnet, dass** das Schattierungsmittel (5, 7, 9) Vanadium-Oxid enthält.

9. Solarkollektor nach einem der Ansprüche 1 bis 4, **dadurch gekennzeichnet, dass** das Schattierungsmittel (5, 7, 9) ein photochromes Material enthält, dessen optischen Eigenschaften in der Form lichtabhängig sind, dass oberhalb einer Grenzlichtstärke ein Farbwechsel erfolgt.

10. Solarkollektor nach Anspruch 9, **dadurch gekennzeichnet, dass** das Schattierungsmittel (5, 7, 9) ein elektrochromes Wolframoxid Vanadium-Oxid enthält und dass die transparente Abdeckung eine Farbstoffsolarzelle mit bevorzugt niedriger Farbstoffkonzentration enthält.

11. Solarkollektor nach einem der Ansprüche 1 bis 4, **dadurch gekennzeichnet, dass** das Schattierungsmittel (5, 7, 9) ein reversibel photoelektrochromes Material enthält.

12. Solarkollektor nach einem der Ansprüche 1 bis 4, **dadurch gekennzeichnet, dass** das Schattierungsmittel (5, 7, 9) ein reversibel elektrochromes Material enthält, welches sich bei externer Beschaltung mit Strom färbt.

13. Solarkollektor nach einem der Ansprüche 1 bis 4, **dadurch gekennzeichnet, dass** das Schattierungsmittel (5, 7, 9) ein reversibel gaschromes Material enthält, welches sich bei Kontakt mit einem Gas färbt.

14. Solarkollektor nach einem der Ansprüche 1 bis 4, **dadurch gekennzeichnet, dass** das Schattierungsmittel (5, 7, 9) ein reversibles Hydrogen Switchable Mirror-System, ein reversibles Polymer Dispersed Liquid Crystal-System oder ein reversibles Suspended Particle Devices -System enthält.

15. Solarkollektor nach einem der vorhergehenden Ansprüche, **dadurch gekennzeichnet, dass** die Grenztemperatur zwischen der maximalen Nutztemperatur und der Stagnationstemperatur liegt.
